(19) Europäisches Patentamt
European Patent Office
Office européen des brevets

(11) EP 0 381 065 B1

(12) EUROPÄISCHE PATENTSCHRIFT

(45) Veröffentlichungstag und Bekanntmachung des Hinweises auf die Patenterteilung:
**19.06.1996 Patentblatt 1996/25**

(51) Int Cl.6: **C08F 220/12**, C08F 299/00, C08F 265/04

(21) Anmeldenummer: **90101552.9**

(22) Anmeldetag: **26.01.1990**

(54) **Elastomere Acrylharze**

Elastomeric acrylic resin

Résines acryliques élastomères

(84) Benannte Vertragsstaaten:
**AT BE CH DE DK ES FR GB IT LI NL SE**

(30) Priorität: **30.01.1989 DE 3902653**

(43) Veröffentlichungstag der Anmeldung:
**08.08.1990 Patentblatt 1990/32**

(73) Patentinhaber: **RÖHM GMBH**
**D-64293 Darmstadt (DE)**

(72) Erfinder:
- **Siol, Werner, Dr.**
  **D-6100 Darmstadt (DE)**
- **Albrecht, Klaus, Dr.**
  **D-6500 Mainz 42 (DE)**
- **Müller, Michael, Dr.**
  **D-6140 Bensheim 3 (DE)**
- **Koralewski, Klaus**
  **D-6086 Riedstadt (DE)**

(56) Entgegenhaltungen:
**EP-A- 0 357 036** **DE-A- 3 909 756**

- **JOURNAL OF POLYMER SCIENCE, Part B, POLYMERS LETTERS, Band 5B, Nr. 6, Juni 1967, Seiten 477-481, Polymer Letters; "Graft colopymers with short side chains"**
- **MACROMOLECULES, Band 13, Nr. 2, März-April 1980, Seiten 216-221, American Chemical Society; K. ITO et al.: "Syntheses of methyl methacrylate-stearyl methacrylate graft copolymers and characterization by inverse gas chromatography"**
- **MAKROMOLEKULARE CHEMIE, Band 186, Nr. 2, Februar 1985, Seiten 261-271, Basel, CH; C. BONARDI et al.: "Synthèse et copolymérisation avec l'acrylamide de macromonomères d'acrylate de dodécyle"**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 381 065 B1

Printed by Jouve, 75001 PARIS (FR)

**Beschreibung**

Gebiet der Erfindung

Die Erfindung betrifft elastomere Acrylharze, aufgebaut aus Acrylsäureestern und Makromonomeren mit einer Glastemperatur Tg oberhalb 60 Grad C.

Stand der Technik

Mit der Bezeichnung "Elastomere" werden zunächst allgemein Stoffe umfaßt, die durch Einwirkung einer geringfügigen Kraft bei Raumtemperatur und höheren Temperaturen sich um mindestens das Doppelte ihrer Ausgangslänge dehnen lassen und die nach Aufhebung des Zwanges wieder rasch und praktisch vollständig in die ursprüngliche Form zurückkehren. Lange Zeit war der Begriff synonym mit "Weichgummi" ("Rubber") (vgl. G. Stoekhert Kunststoff-Lexikon, 6. Auflage, Carl Hanser Verlag, München).

Als Voraussetzung für Elastomeren-Eigenschaften wurde das Vorliegen von Makromolekülen mit extensiver, flexibler Ketten-Struktur genannt, was wiederum einen Zustand deutlich oberhalb der Glastemperatur Tg der Makromoleküle voraussetzt. Weitere Voraussetzungen seien ein geringer Kristallisationsgrad der Makromoleküle im nichtdeformierten Zustand und die intermolekulare Vernetzung einzelner Ketten unter Ausbildung eines (unlöslichen) dreidimensionalen Netzwerks. (Vgl. Kirk-Othmer, Encyclopedia of Chemical Technology 3rd Ed. Vol. 8, pp. 446 - 469, J. Wiley 1979).

Typische Acrylat-Elastomere, wie sie gegenwärtig in beträchtlichem Umfang industrielle Anwendung finden, sind Polymere und Copolymere von Acrylsäureestern mit Ethylacrylat und Butylacrylat als Hauptbestandteilen. Besonders vorteilhaft wirkt sich deren Beständigkeit gegen Öle und ihre relativ günstige Wärmestandfestigkeit aus. Der hauptsächliche Nachteil der genannten Acrylat-Elastomeren ist darin zu erblicken, daß sie beim Abkühlen versteifen und bereits bei vergleichsweise hohen Temperaturen spröde werden.

Neben der vor allem radikalisch bewirkten Vernetzung von Polymeren mit niedriger Glastemperatur kann man auch durch Polyadditionsreaktion zu Elastomeren z.B: auf Polyurethanbasis gelangen.

Neben kovalent vernetzten Polyurethanen stehen auch Polyurethane zur Verfügung, die "physikalisch" vernetzt sind. Derartige physikalisch vernetzte Elastomere sind thermoplastisch verarbeitbar.

Während bei dem klassischen "Rubber" die Vernetzung (Vulkanisation) ein langsamer, irreversibler Prozeß ist, der in der Hitze abläuft, findet bei den "thermoplastischen Elastomeren" ein Übergang von der formbaren Schmelze zum elastomeren Festkörper statt, der beim Abkühlen schnell und reversibel verläuft. (Vgl. H.F. Mark et al. Encyclopedia of Polymer Science and Engineering, 2nd Ed., Vol. 5, pg. 416 - 430, J. Wiley & Sons, 1986).

Die herrschende Vorstellung sieht in den "thermoplastischen Elastomeren" multiphasische Systeme, bei denen sich die Phasen in inniger Dispersion befinden. In manchen Fällen kann auch (chemische) Bindung durch Block- oder Pfropfcopolymerisation eine Rolle spielen, bei anderen genügt offenbar ein hoher Dispersionsgrad. In der Regel besteht mindestens eine der Phasen aus einem Polymer-Material, das bei Raumtemperatur "hart" ist, aber beim Erwärmen flüssig wird. Eine weitere Phase besteht in der Regel aus einem "weichen" Material, das bei Raumtemperatur gummielastisch ist. Von technischer Bedeutung sind vor allem thermoplastische Block-Copolymere, deren "harte" Segmente z.B. aus Polystyrol, Polysulfon, Polyester, Polyurethan oder Polycarbonat und deren "weiche" Segmente aus Polybutadien, Polyisopren, Polyethylen-Butylen-Copolymerisaten, Polydimethylsiloxan oder Polyether bestehen können. Transparente thermoplastische Elastomere auf der Basis von Polyacrylsäureestern mit Polystyrolpfropfästen werden von G.O. Schulz und R. Milkovich beschrieben: J. Appl. Polym. Sci., Vol. 27, 4773 - 4786 (1982). Die Synthese dieser Polyacrylsäureester mit Polystyrolseitenketten erfolgt auf der Basis von Styrol-Makromonomeren, wie sie gemäß R. Milkovich et al. US-P 3 786 116 mit sehr enger Molekulargewichtsverteilung erhalten werden. In derartigen Copolymeren kann die "Vernetzung" gedeutet werden als Assoziation glasartiger oder kristalliner "harter" Blöcke im Polymerverband.

Den oben genannten thermoplastischen Elastomeren ist gemeinsam, daß sie sich zwar durch eine hohe Reißspannung (nach DIN 53 455) auszeichnen, aber nur eine relativ geringe Dehnbarkeit aufweisen. Auch die Witterungsbeständigkeit dieser Materialien ist unbefriedigend.

Die generelle Tendenz der Polymerchemie, möglichst einheitliche Polymerisate zu produzieren, beherrscht auch die Lehre der EP-A 0 357 036. Soweit nachvollziehbar, werden in dieser Druckschrift Kammpolymere durch Polymerisation von Monomeren auf Makromonomere in ganz speziellen Lösungsmitteln erhalten, nämlich in spezifisch halogenierten Kohlenwasserstoffen sowie Lösungsmitteln, die zu weniger als 10 Gew.-% wasserlöslich sind. Lösungsmittel wie Ethylacetat, Toluol, sowie Methylisobutylketon werden als ungeeignet befunden. Die DE-A 39 09 756 betrifft ein Zweikomponenten-Acryl-Urethan-Beschichtungsmaterial zur Beschichtung von Oberflächen. Die gesamte Lehre ist auf die Reaktion eines Pfropfpolymeren (auf Basis eines Methylmethacrylat-Makromonomeren) mit einer Polyisocyanatverbindung als Vernetzer zugeschnitten und läßt keine alternativen Möglichkeiten erkennen. Durch die Vernetzung

entstehen Makromoleküle mit unbestimmbar großem Molekulargewicht.

Aufgabe und Lösung

Die Elastomeren des Standes der Technik gehören verschiedenen Polymerklassen an und sie weisen technisch gesehen die diesen Polymerklassen innewohnenden Schwächen auf.
Für die "thermoplastischen Elastomeren" gilt allgemein, daß sie in einigen Qualitätsmerkmalen, wie z.B. der Kompressibilität, Lösungsmittelbeständigkeit und Wärmeformbeständigkeit hinter den entsprechenden vulkanisierten Produkten zurückbleiben (vgl. H.F. Mark et.al., Encyclopedia of Polymer Science and Engineering Vol., 5, loc.cit).
Es bestand daher die Aufgabe unter Ausnutzung der in vieler Hinsicht besonders günstigen Eigenschaften von Acrylharzen elastomere Kunststoffe auf Acrylharzbasis zur Verfügung zu stellen, insbesondere thermoplastische Elastomere dieses Typs.

Es wurde nun gefunden, daß bestimmte aus Acrylsäureestern aufgebaute Copolymere Elastomere mit hervorragenden Eigenschaften darstellen.
Die erfindungsgemäßen Elastomere auf Acrylatbasis bestehen zu mindestens 40 Gew.-% (bezogen auf die Gesamtheit der Polymeren) aus einem oder mehreren Copolymerisaten mit einem Molekulargewicht größer 50 000 Dalton aufgebaut aus

α) Acrylatmonomeren zu 50 - 95 Gew.-% und
β) Makromonomeren bestehend aus einer vinylischen Gruppe und damit kovalent verbunden einer Polyvinyleinheit ausgewählt aus der Gruppe der Acrylate und Methacrylate mit einer Glastemperatur Tg von mindestens 60 Grad C, vorzugsweise mindestens 90 Grad C und einem Molekulargewicht von 500 bis 100 000, vorzugsweise 2 000 bis 50 000 Dalton.

mit der Maßgabe, daß
die Uneinheitlichkeit der erfindungsgemäß eingesetzten Makromonomeren, ausgedrückt durch $\frac{M_w - M_n}{M_n}$ in der größer 0,5. ist (Zur Bestimmung der Molekulargewichte vgl. H.F. Mark et al. Encyclopedia of Polymer Science and Engineering 2nd Ed. Vol.10, pg. 1 - 19, 1987).
Die erfindungsgemäß verwendeten Makromonomeren enthalten vorzugsweise Schwefel.

In den erfindungsgemäßen Elastomeren wirken die mit den Polyacrylat-Hauptketten unverträglichen Makromonomerphasen als physikalische Vernetzungspunkte.
Bei Temperaturen oberhalb der Glastemperatur dieser Makromonomerphasen sind derartige Materialien thermoplastisch verarbeitbar, es sei denn es liege zusätzlich kovalente Vernetzung vor.
Von technischem Interesse sind indessen beide Elastomertypen, sowohl die rein physikalisch vernetzten Acrylsäureester-Makromonomer-Copolymeren als auch die zusätzlich kovalent vernetzten Acrylsäureester-Makromonomer-Copolymeren, wobei jedoch die rein physikalisch vernetzten Acrylsäureester-Makromonomer-Copolymeren besonderes Interesse beanspruchen können.

Von besonderem Interesse sind erfindungsgemäß elastomere Acrylharze EAH bestehend aus

A) 60 - 100, insbesondere 60 - 99,9 Gew.-% Copolymere mit einem Molekulargewicht größer als 50 000 Dalton, vorzugsweise im Bereich 100 000 bis 10 Millionen, aufgebaut aus

a) 50 - 95 Gew.-%, vorzugsweise 70 - 90 Gew.-% (bezogen auf die Gesamtheit der Monomeren-Bestandteile von A)) Monomere oder Monomermischungen der Formel I

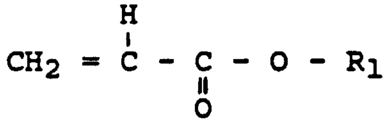

(I)

b) 5 - 50 Gew.-%, vorzugsweise 10 - 30 Gew.-%, Makromonomeren oder Makromonomerenmischungen der Formel II oder III

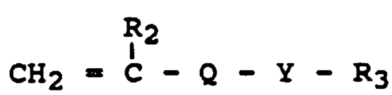

(II)

$$R_4 - Y - R_5 \qquad (III)$$

mit einem Molekulargewicht der Makromonomeren im Bereich 500 - 100 000 Dalton, vorzugsweise im Bereich 2 000 bis 50 000 Dalton, ganz besonders bevorzugt im Bereich 5 000 bis 30 000 Dalton und einer Glastemperatur Tg von wenigstens 60 Grad C,
c) 0 - 45 Gew.-Teile, vorzugsweise 0,1 bis 20 Gew.-Teile bezogen auf die Summe von a) + b) einer weiteren mit a) und b) copolymerisierbaren Vinylverbindung $V_m$

B) 40 - 0, insbesondere 40 - 0,1 Gew.-% nicht mit (I) copolymerisierte Polymere, aufgebaut aus den die Polymerketten Y bildenden Monomeren mit einem Molekulargewicht im Bereich 500 - 100 000 Dalton, mit der Maßgabe, daß

$R_1$ für einen Kohlenwasserstoffrest mit 1 - 12 Kohlenstoffatomen,

$R_2$ für Wasserstoff oder Methyl

$R_3$ für Wasserstoff oder einen Alkylrest mit 1 bis 24 Kohlenstoffatomen,

$R_4$,$R_5$ für Wasserstoff oder einen Alkylrest mit 1 bis 24 Kohlenstoffatomen, für einen eine -$CH_2$ = CH - oder eine -$CH_2$ = $CCH_3$-Gruppe enthaltenden Kohlenwasserstoffrest mit 2 bis 20 Kohlenstoffatomen mit der Maßgabe, daß wenn $R_4$ eine $CH_2$=-CH- oder

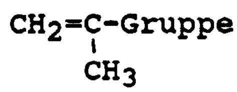

enthält, $R_5$ keine solche Gruppen enthält und umgekehrt.

Y für eine Polymerkette ausgewählt aus den Struktureinheiten

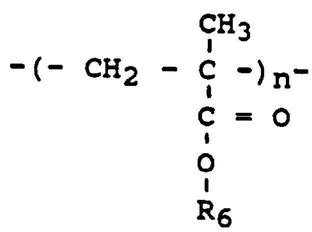

IV

oder

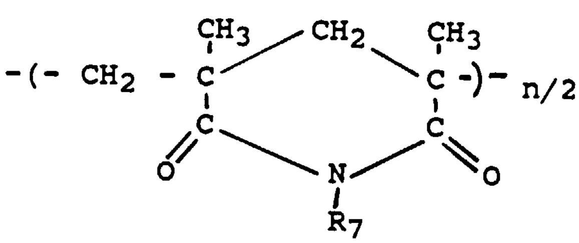

V

wobei

$R_6$ die Bedeutung Methyl, Ethyl, Isopropyl Cycloalkyl, vorzugsweise mit 5 - 8 Ring-Kohlenstoffatomen oder gegebenenfalls substituiertes Phenyl

$R_7$ die Bedeutung Alkyl mit 1 bis 8 Kohlenstoffatomen oder Aryl insbesonders Phenyl gegebenenfalls mit einem Alkylrest mit 1 bis 4 Kohlenstoffatomen substituiert, besitzt und wobei

n so bemessen ist, daß das Molekulargewicht der Makromonomeren im Bereich 500 bis 100 000 Dalton liegt, und

Q für einen bifunktionellen Rest der die Polymerkette Y mit der polymerisationsfähigen Einheit

$$CH_2 = CR_2$$

verbindet

steht.

Vorzugsweise steht n für eine Zahl im Bereich 10 bis 500. Bei den Monomeren der Formel I steht $R_1$ vorzugsweise für Ethyl oder Butyl, Propyl, Hexyl (in Form der üblicherweise verwendeten Isomeren) und 2-Ethylhexyl

$R_3$ steht vorzugsweise für Wasserstoff, wenn das Makromonomer auf dem Wege der radikalischen Polymerisation erzeugt wurde, im Einklang mit einer bevorzugten Ausführungsart, beziehungsweise für Wasserstoff oder einen Alkylrest mit 1 bis 24 Kohlenstoffatomen im Falle der Herstellung des Makromonomeren auf dem Wege der Group-Transfer-Polymerisation (GTP).

Y steht in einer bevorzugten Ausführungsform für ein Polymeres des Methylmethacrylats, inbesondere ein solches mit einem Gehalt von mindestens 80 Gew.-% Methylmethacrylat, d.h. $R_6$ steht bevorzugt für Methyl und auch für Copolymere von Styrol bzw. α-Methylstyrol mit Acrylnitril sowie für N-substituierte Polyglutarimide wie sie beispielsweise durch Umsetzung von Polymethylmethacrylateinheiten mit N-Alkylaminen, insbesondere N-Methylamin zugänglich sind. Die Polymerkette Y kann in untergeordnetem Maße, d.h. zu < 40 Gew.-Teilen weitere Monomerbausteine enthalten.

$R_7$ steht bevorzugt für Methyl. Sofern $R_7$ für substituiertes Phenyl steht, handelt es sich vorzugsweise um Substitutien mit $C_1$-$C_4$-Alkyl.

Die copolymerisierbaren Vinylverbindungen $V_m$ sind von a) und b) verschiedene in Anteilen von 0 bis 45 Gew.-Teilen, vorzugsweise von 0,1 bis 40, insbesondere 0,1 bis 20 Gew.-Teilen (bezogen auf die Summe der Monomeren a) und b) angewendete Monomere.

Vorzugsweise handelt es sich dabei um die Nitrile oder Amide der Acryl- bzw. Methacrylsäure, oder um Vinylester z. B. Vinylacetat oder Vinylpropionat oder um Styrol bzw. substituierte Styrole, insbesondere p-Methylstyrol.

Die Komponente B) stellt definitionsgemäß ein mit der Komponente A) nicht kovalent verknüpftes Polymer vom Typ Y dar, wobei es sich zum einem um nicht-umgesetztes (Rest-)Makromonomeres handelt, zum anderen aber auch um eine Polyvinylverbindung vom Typ Y, die keine Vinylgruppe trägt, demnach kein Makromonomeres darstellt. Diese Polymerkomponente wird bei der in technischem Maßstab durchgeführten Makromonomersynthese in der Regel als Nebenprodukt erhalten. Die Komponente B) ist vorzugsweise in Anteilen von 0,1 bis 40, vorzugsweise 0,5 bis 20 Gew.-% in den elastomeren Acrylharzen EAH enthalten. Überraschenderweise wurde festgestellt, daß solche Nebenprodukte in hohem Maße ohne Beeinträchtigung der Gebrauchseigenschaften der Elastomeren enthalten sein können.

Der bifunktionelle Rest Q hat vorzugsweise die Bedeutungen

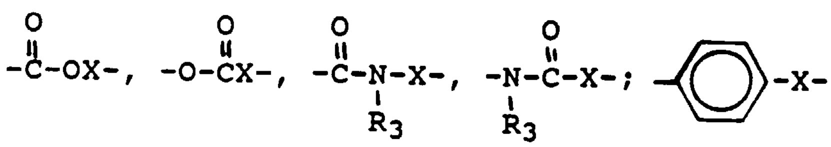

wobei $R_3$ die oben bezeichneten Bedeutungen besitzt und X für einen Alkylidenrest mit 2 bis 24 Kohlenstoffatomen, bevorzugt für einen Alkylidenrest, der mindestens ein Sauerstoffatom, ein Schwefelatom oder ein Stickstoffatom enthält, steht. Besonders bevorzugt sind Gruppen X der folgenden Typen

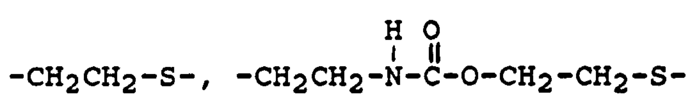

Bei einer besonders bevorzugten Ausführungsart der Erfindung bestehen die elastomeren Acrylharze EAH aus

A) 60 - 100 Gew.-% Copolymere aus

a') 50 - 95 Gew.-% Ethylacrylat, Butylacrylat oder 2-Ethylhexylacrylat

b') 5 - 50 Gew.-% Makromonomeren der Formel II' oder II"

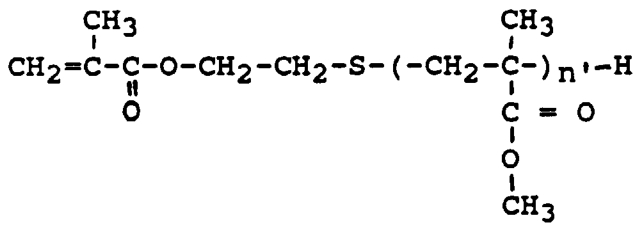

II'

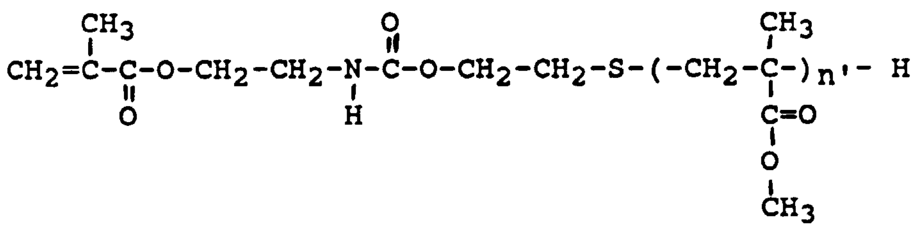

II"

wobei n' für 10 - 500 steht und

B) 40 - 0,1 Gew.-% von Polymeren des Typs

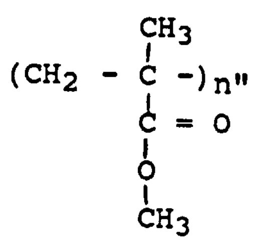

wobei n" für eine Zahl im Bereich 10 bis 500 steht.

Von besonderem Interesse sind auch elastomere Acrylharze EAH die zwei verschiedenartige, jedoch miteinander verträgliche Makromonomere als Hauptsegmente enthalten. Beispielhaft für eine derartige Ausführungsform seien Blends aus

a") Copolymeren aus 50 - 95 Gew.-% Butylacrylat und 50 - 5 Gew.-% Makromonomere der Formel II"

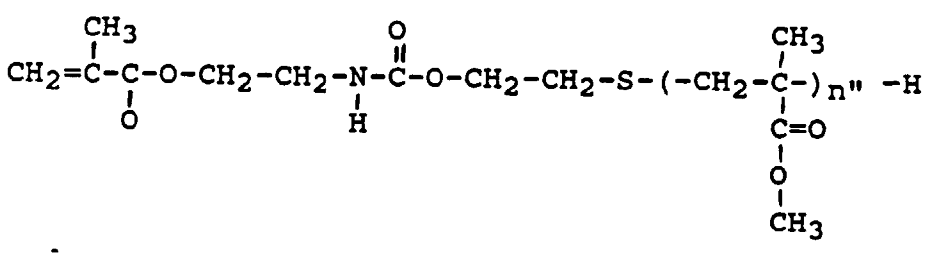

und
b") Copolymere aus 50 - 95 Gew.-% Butylacrylat und 50-5 Gew.-% Makromonomere der Formel II'"

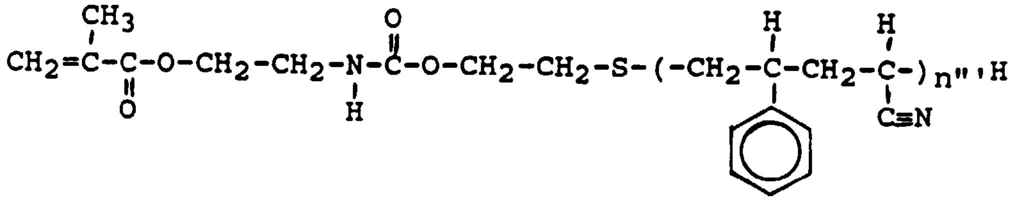

wobei n″ und n‴ für eine Zahl im Bereich 5 bis 500 stehen, genannt.

In der Regel werden die Copolymere ein Molekulargewicht im Bereich 50 000 bis 2 000 000 Dalton aufweisen. Derartige Systeme sind aus Lösungen gießbar, extrudierbar, spritzgießbar oder preßbar. Es handelt sich also um thermoplastisch verarbeitbare Elastomere.

Das Polymerisationsverfahren

Zur Herstellung der Copolymeren bedient man sich vorteilhaft der radikalischen Polymerisation (vgl. H. Rauch-Puntigam, Th. Völker, "Acryl- und Methacrylverbindungen", Springer-Verlag, Berlin 1967). Das Polymerisationsverfahren kann beispielsweise in an sich bekannter Weise in Lösung durchgeführt werden.

Als Lösungsmittel kommen inerte Lösemittel, wie z.B. Ester, beispielsweise Butylacetat, Ethylacetat, Ketone wie Aceton, Kohlenwasserstoffe wie Toluol u.ä. in Frage. Als Beschleuniger werden in organischen Lösungsmitteln die üblichen Perverbindungen, insbesondere Perester, wie z.B. tert. Butylperneodecanoat, Dibenzoylperoxid, oder Azoverbindungen wie z.B. Azoisobutyronitril verwendet.

Die Beschleuniger werden üblicherweise in Mengen von 0,01 bis 2 Gew.-% bezogen auf die Monomeren eingesetzt. Zweckmäßigerweise empfiehlt es sich, das Molekulargewicht der Polymerisate durch Zusatz von Reglern, beispielsweise der üblichen Schwefelregler, wie 2-Ethylhexylthioglycolat, tert. Dodecylmercaptan in Mengen von gewöhnlich 0,01 bis 2 Gew.-% bezogen auf die Monomeren zu kontrollieren.

Man bringt wie üblich die Polymerisation durch Temperaturerhöhung in Gang und führt die Polymerisation bei erhöhter Temperatur, als Anhalt seien ca. 60 Grad C genannt, durch. Zweckmäßig arbeitet man unter einem inerten Schutzgas, beispielsweise Argon. Die Polymerisationsdauer liegt im üblichen Rahmen, beispielsweise bei einigen Stunden, gewöhnlich bei ca. 5±2 Stunden. Eine weitere Ausgestaltung der vorliegenden Erfindung sieht die Verwendung vernetzender Monomerer, d.h. von Verbindungen mit mehr als einer Vinyldoppelbindung im Molekül vor. Genannt seien z.B. die (Meth)acrylsäureester bzw. -amide von Di- und Polyolen bzw. von Di- und Polyaminen. Genannt seien z.B. Vernetzungsmittel wie Trismethylolpropantriacrylat oder Vernetzungsmittel wie Glykoldi(meth)acrylat.
Im allgemeinen liegen die zugesetzten Mengen an Vernetzer im Bereich 0,01 bis 5 Gew.-Teile bezogen auf die Gesamtheit der Monomeren.

So kann man beispielsweise Mischungen der Monomeren der Formel I und der Makronomeren der Formel II und/oder III unter Zusatz von vernetzenden Monomeren zu Platten oder anderen Formkörpern aushärten.

Besonders bevorzugt sind jedoch elastomere Acrylharze, die zumindest vor der Verarbeitung noch nicht kovalent vernetzt sind und ein Molekulargewicht im Bereich 100 000 bis 10 000 000 aufweisen.

Die Makromonomeren

Definitionsgemäß handelt es sich bei Makromonomeren um Polymere mit einer polymerisationsfähigen, insbesondere radikalisch polymerisationsfähigen Endgruppe im Molekulargewichtsbereich 500 bis ca. 100 000, bevorzugt im Molekulargewichtsbereich 2 000 bis 50 000.
Die Herstellung von Makromonomeren wird in der Literatur eingehend beschrieben (P.F. Rempp. E. Franta, Adv. Polym. Sci. 58, 1 (1984); K. Albrecht, W. Wunderlich, Angew. Makromol. Chem. 145/146, 89 - 100 (1986); H. Mark et al. Encyclopedia of Polymer Science & Technology, 2nd Ed. Vol.9, 195 - 204, J. Wiley & Sons 1987 ; P. Rempp, E. Franta, P.Masson and P.Lutz, Progr. Colloid & Polymer Sci. 72, 112 - 118 (1986)). P. Rempp et al., Makromol. Chem., Rapid Commun. 3, 499 - 504 (1982), T. Corner, Advances in Polymer Science 62, 95 - 141 (1984), Paul F.Rempp and Emile Franta, Advances in Polymer Science 58, 1 - 50 (1984), Yves Gnanou, Pierre Lutz, Makromol. Chem. 190, 577 - 588 (1989), Y. Tsukahara et al., Macromolecules 22, 1546 - 1552 (1989), Y. Tsukahara et al., Polym. J. 21, 377 - 391 (1989).
Makromonomere sind bekanntlich über anionische und kationische "Living polymerization" und über radikalische Polymerisation zugänglich, wobei die polymerisationsfähige Endgruppe gewöhnlich bei der Initiierung oder beim Kettenabbruch eingeführt wird, bzw. durch eine nachfolgende chemische Umsetzung.

So kann man beispielsweise durch radikalische Polymerisation von MMA mit Azo-bis-isobutyronitril (AIBN) und in

Anwesenheit von Thioglykolsäure die Verbindung

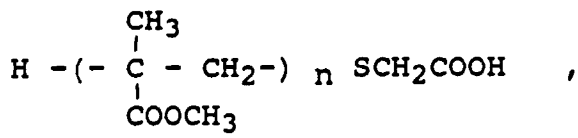

herstellen, deren weitere Umsetzung mit Glycidylmethacrylat das Makromonomere der Formel

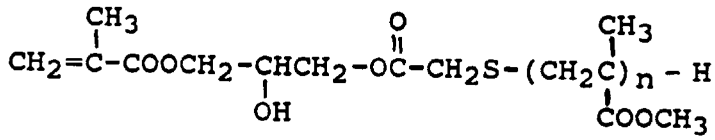

ergibt.

Bei analoger Umsetzung mit 2-Mercaptoethanol und AIBN erhält man die Verbindung

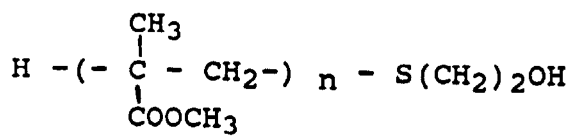

deren weitere Umsetzung mit

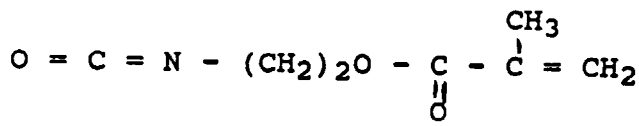

in Toluol und Di-n-butylzinndilaurat-Katalyse bei ca. 40 Grad C zu dem Makromonomeren II″ führt (vgl. K. Albrecht, W. Wunderlich loc.cit).

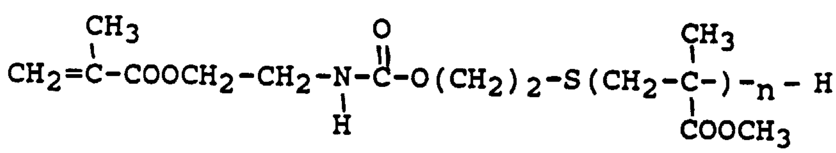

II″

Von besonderem Interesse ist die Polymerisation von Methylmethacrylat (bzw. von Ethyl-, Isopropyl-, Cycloalkyl oder eines gegebenenfalls substituierten Phenylmethacrylates) mit 1 - 10 Gew.-% 2-Mercaptoethanol und die anschließende Umsetzung der erhaltenen Polymeren mit Methacrylsäureanhydrid. Besonders bevorzugte Makromonomere sind demnach die auf diesem Wege zugänglichen Makromonomeren von Typ II′.

Eine weitere interessante Möglichkeit zur Herstellung der Makromonomeren bietet das Verfahren der "Group Transfer Polymerization" (GTP; vgl. H.F. Mark et.al., Encyclopedia of Polymer Science and Technology, 2nd Ed. Vol. 7, 580 588, J. Wiley & Sons 1987).

Die Bestimmung der Molekulargewichte geschieht durch Gelpermeationschromatographie (vgl. H.F. Mark et al. Encyclopedia of Polymer Science and Technology 2nd Ed. Vol. 10, 1 - 19, D. Wiley & Sons, 1987).

Die Bestimmung der Glastemperatur Tg wird nach E.A. Turi, Thermal Characterization of Polymeric Materials, Academic Press, New York 1981 bzw. Vieweg-Esser, Kunststoff-Handbuch Vol., IX, Polymethacrylate, pp 333 - 340, Carl Hanser Verlag 1975, vorgenommen.

Die elastomeren Acrylharze EAH

Die elastomeren Acrylharze EAH bestehen erfindungsgemäß zu

A) 60 - 100 Gew.-% aus Copolymeren der Zusammensetzung:

a) 50 - 95 Gew.-% eines Acrylsäureesters der Formel I
b) 50 - 5 Gew.-% aus Makromonomeren der Formeln II oder III und
c) 0 - 45 Gew.-% einer mit a) und b) copolymerisierbaren Vinylverbindung $V_m$ sowie zu

B) 40 - 0 Gew.-% einer mit A) nicht kovalent verbundenen Polyvinylverbindung, die denselben chemischen Aufbau aufweist, wie das Makromonomere oder mit diesem verträgliche Mischungen eingeht.

Von besonderer Bedeutung für die Gebrauchseigenschaften der EAH sind der Gewichtsanteil der Makromonomeren II oder III an Copolymeren A sowie das Verhältnis der Molekulargewichte der Makromonomeren II oder III und des Copolymeren A zueinander.

Für die erfindungsgemäßen EAH gilt dabei folgende Regel: Das Molekulargewicht der Copolymeren A multipliziert mit dem Gewichtsbruch des Makromonomeren am Copolymeren muß deutlich größer sein als das Molekulargewicht des Makromonomeren der Formel II oder III.

In der Regel gilt die Beziehung:

$$M_{w_{\text{Copolymer A}}} \cdot X_{w_{\text{Makromonomer}}} > 2\, M_{w_{\text{Makromonomer}}}$$

Bevorzugt gilt

$$M_{w_{\text{Copolymer A}}} \cdot X_{w_{\text{Makromonomer}}} > 3\, M_{w_{\text{Makromonomer}}}$$

besonders bevorzugt gilt

$$M_{w_{\text{Copolymer A}}} \cdot X_{w_{\text{Makromonomer}}} > 5 \cdot M_{w_{\text{Makromonomer}}}$$

Ganz besonders bevorzugt gilt die Beziehung

$$M_{w_{\text{Copolymer A}}} \cdot X_{w_{\text{Makromonomer}}} > 8\, M_{w_{\text{Makromonomer}}}$$

Dabei stehen $M_{w_{\text{Copolymer A}}}$ für das Gewichtsmittel*) des Copolymeren A, $M_{w_{\text{Makromonomer}}}$ für das Gewichtsmittel*) des Makromonomeren, $X_{w_{\text{Makromonomer}}}$ steht für den Gewichtsbruch des Makromonomeren am Copolymeren A. $X_{w_{\text{Makromonomer}}} = \frac{\text{Gew.-\% Makromonomer}}{100\ \text{Gew.-\%}}$

*) der Molmasse

Von besonderem Interesse sind Copolymere vom Typ A), die hinsichtlich der Molekulargewichtsverteilung keine sehr enge Verteilung aufweisen.

Damit sind Makromonomere, wie sie durch radikalische Polymerisation von Vinylmonomeren mit einem funktionellen Regler und nachfolgender Umsetzung der Funktion zu einem Makromonomeren erhalten werden, bevorzugt.

Von Interesse für die erfindungsgemäßen EAH sind Makromonomeren mit einer Uneinheitlichkeit > 0,3, bevorzugt > 0,7. Auch für das Copolymere A) wird in der Regel eine Uneinheitlichkeit > 0,3 gefunden. Bevorzugt sind solche Copolymere A), die eine Uneinheitlichkeit > 0,7, besonders bevorzugt > 1,2 und ganz besonders bevorzugt > 2,2 aufweisen.

Von besonderem Interesse ist, daß auch die chemische Uneinheitlichkeit des Copolymeren erheblich sein kann, sofern die oben genannten Kriterien hinsichtlich Molekulargewicht der Copolymeren A), der Makromonomeren II oder III sowie der Gewichtsanteil des Makromonomeren an Copolymeren gewahrt sind.

So können die EAH durchaus in Anteilen von 0,1 bis 40 Gew.-% mit dem Makromonomeren chemisch identische oder mit den Makromonomeren verträgliche Polymere B) enthalten. In der Regel weisen diese Polymeren B) in etwa das

Molekulargewicht der Makromonomeren auf. Es können aber auch zusätzlich Polymeren B) mit einem deutlich von Makromonomeren abweichenden (in der Regel höheren) Molekulargewicht zugesetzt werden.

Von besonderer Bedeutung für die anwendungstechnischen Eigenschaften der erfindungsgemäßen EAH ist auch die Randbedingung, daß die das Copolymere A aufbauende Polymerhauptkette, die im wesentlichen aus den Monomeren (I) und $V_M$ aufgebaut ist, im Temperaturbereich von -50 Grad C bis +100 Grad C (bevorzugt bis +200 Grad C, besonders bevorzugt bis +250 Grad C) mit den Makromonomeren unverträglich ist.

Damit ist im Einklang mit DE-OS 37 08 427 vom 16.03.1987, die verträgliche Polymermischungen aus Poly(meth) acrylaten beschreibt, in der Regel $R_1$ nicht gleichbedeutend mit $R_6$. Von besonderem Interesse ist vielmehr der Fall, daß $R_1$ und $R_6$ um wenigstens 1 Kohlenstoffatom, bevorzugt um wenigstens 2 Kohlenstoffatome und ganz besonders bevorzugt um wenigstens 3 Kohlenstoffatome unterschieden sind. Besonderes Interesse verdient der Fall, daß $R_1$ ein Kohlenwasserstoffrest aus der Gruppe Butyl, Pentyl, Hexyl, 2-Ethylhexyl und $R_6$ Methyl ist.
Von besonderer Bedeutung ist auch der Fall, daß $R_1$ die oben genannte Bedeutung Butyl, Pentyl, Hexyl, 2-Ethylhexyl aufweist, der Anteil der copolymerisierbaren Vinylverbindung $V_M$ am Copolymere A < 20, bevorzugt < 10 Gew.-% beträgt, und das Makromonomere die Polymerkette Y entsprechend V $R_7$ Methyl aufweist. Von besonderem Interesse ist auch in diesem Fall ein Makromonomeres vom Typ II, wie überhaupt durchweg die Makromonomeren vom Typ II gegenüber den Makromonomeren vom Typ III bevorzugt sind.

Den erfindungsgemäßen elastomeren Acrylharze können noch an sich bekannte Zusätze wie Stabilisatoren und Verarbeitungshilfsmittel in den üblichen Mengen zugesetzt werden (vgl. Gächter-Müller, Kunststoff-Addition, Carl-Hanser-Verlag 1979). Als Licht- und Alterungsschutzmittel haben sich z.B. sterisch gehinderte Amine, z.B. die unter den Warenzeichen ® Tinuvin im Handel befindlichen, besonders bewährt.

Die erfindungsgemäßen elastomeren Acrylharze EAH zeichnen sich durch hohe Witterungsbeständigkeit bei gleichzeitig hoher Wärmeformbeständigkeit aus. In ungefülltem Zustand sind die Acrylharze transparent.
Die Reißdehnung (nach DIN 53 455) kann sehr hohe Werte erreichen, z.B. > 1 000 %. Von besonderer technischer Bedeutung ist die Möglichkeit, die neuen elastomeren Acrylharze aus Lösungen zu Filmen zu vergießen bzw. ausgehend von Elastomer-Granulat dieses durch Verpressen, Spritzpressen, Spritzgießen, Blasformen, Extrudieren formgebend zu verarbeiten.
Besonderes Interesse erweckt auch die Möglichkeit, nachträglich Gegenstände, die aus den erfindungsgemäßen Elastomeren hergestellt werden, z.B. durch Tiefziehen umzuformen.
Die thermoplastische Verarbeitbarkeit eröffnet auch die Möglichkeit der Wiedereinarbeitung von Abfallmaterial.

Die folgenden Beispiele dienen zur Erläuterung der Erfindung.

## BEISPIELE

### Beispiel 1

Synthese eines Polymethylmethacrylat mit Hydroxylendgruppen.

200 g Methylmethacrylat werden mit 4 g Mercaptoethanol und 0,2 g Azoisobutyronitril (AIBN) versetzt und in einem Kunststoffbeutel unter Schutzgas 48 Stunden bei 50 Grad C polymerisiert.
Das Polymere wird in Aceton gelöst und in Petrolether gefällt. Das so erhaltene Polymethylmethacrylat hat ein Molekulargewicht von $M_W$ = 10 400.

### Beispiel 2

Synthese eines Polymethylmethacrylatmonomeren entsprechend Formel II".

Y = IV mit $R_6$ = Methyl
$R_2$ = $CH_3$

Q =
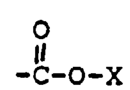

mit

X =
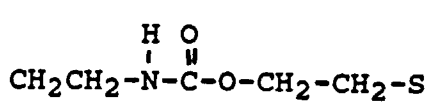

$R_3$ = H

400 g eines PMMA mit endständiger Hydroxylgruppe gemäß Beispiel 1 werden in wasserfreiem Toluol zu einer 40 %igen Lösung gelöst.

Nach Zusatz von 1 g Dibutylzinndilaurat als Katalysator und 20 g Isocyanatoethylmethacrylat wird bei ca. 40 Grad C 16 Stunden belassen, anschließend werden 50 g Ethanol zugesetzt und nach Verdünnen mit Toluol in Methanol gefällt.
Das so erhaltene Polymethylmethacrylatmonomere hat ein Molekulargewicht $M_W$ = 27 100, U = 0,92.

Beispiel 3

Polymerisationsverfahren

In einem Rührer und Gaseinleitungsrohr versehenen 21-Reaktionsgefäß werden 60 g Makromonomere der Formel

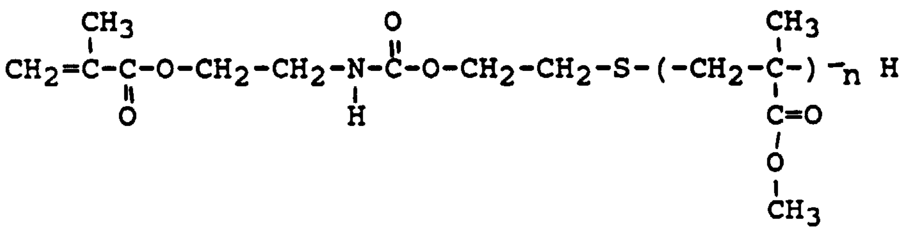

MW: 10.700 Uneinheitlichkeit U: 0,94 und

| | |
|---|---|
| 340,0 g | Butylacrylat mit |
| 510,0 g | Butylacetat |
| 0,2 g | 2-Ethylhexylthioglykolat |
| 0,8 g | t-Butylperneodecanoat |

versetzt und 4 Stunden bei 60 Grad C unter Argon als Schutzgas polymerisiert.

Danach wird 0,1 g ® Tinuvin 770 zugesetzt, das Polymere in Methanol ausgefällt und im Vakuum getrocknet.
Das so erhaltene Copolymere kann beim Erwärmen über 150 Grad C durch einfaches Verpressen umgeformt werden.
Es ist also thermoplastisch verarbeitbar.
J-Wert des Copolymeren: 338 ml/g.

Beispiel 4

Das gemäß Beispiel 3 enthaltene elastomere Acrylharz EAH wird in Butylacetat aufgelöst. Die so erhaltene Lösung wird zu Filmen ausgegossen und getrocknet.
Es resultieren glasklare, nicht klebrige, hochelastische 0,5 mm dicke Filme.
Die Reißfestigkeit des Materials beträgt 2,3 MPa, die Reißdehnung beträgt 1215 %.

Beispiel 5

Man löst das gemäß Beispiel 3 erhaltene Copolymere in Butylacetat, setzt 1 Gew.-% bezogen auf das Copolymere eines Styrol-Acrylnitril-Copolymeren (SAN) zu und gießt ca. 0,8 mm dicke Filme. Die so erhaltenen Filme sind glasklar.
Reißfestigkeit F-max = 2,7 MPa
Reißdehnung = 1100 %.

Beispiel 6

80 g eines gemäß Beispiel 2 hergestellten Makromonomeren des Aufbaus:

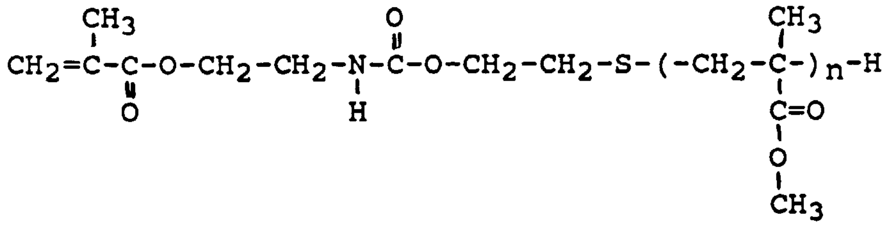

mit $M_W$ = 27 100, $M_n$ = 14 100, $U = \frac{M_w - M_n}{M_n}$ = 0,92 werden gemäß Beispiel 3 in 320 g Butylacrylat und 510 g Butylacetat gelöst und unter Argon als Schutzgas unter Zusatz von 0,1 g t-Butylperneodecanoat bei einer Innentemperatur von 60 - 74 Grad C polymerisiert. Nach Beendigung der Hauptpolymerisationsphase (ca. 1,5 Stunden nach Polymerisationsbeginn werden weitere 0,2 g t-Butylperneodecanoat zugesetzt und eine weitere Stunde bei 60 Grad C gerührt. Danach werden 0,1 g® Tinuvin 770 als Stabilisator zugesetzt und die Polymerlösung mit 900 g Butylacetat verdünnt. Nach Ausfällung in Methanol und Trocknung im Vakuum bei 50 Grad C erhält man ein Polymeres, das aus Butylacetat als Lösungsmittel zu glasklaren Filmen ausgegossen und getrocknet werden kann.
Charakterisierung des so erhaltenen Copolymeren A hinsichtlich Molekulargewicht:

$M_W$ = 2 310 000
$M_n$ = 291 000
U = 6,94

Somit gilt für dieses Copolymere A) mit 20 Gew.-% Makromonomeren:

$$M_{w_{\text{Copolymer A}}} \cdot X_{w_{\text{Makromonomer}}} = 2\,310\,000 \cdot 0{,}2 = 462\,000$$

Damit ist die Bedingung erfüllt, daß

$$\underbrace{M_{w_{\text{Copolymer A}}} \cdot X_{w_{\text{Makromonomer}}}}_{462\,000} > \underbrace{X_{w_{\text{Makromonomer}}}}_{27\,100}$$

ist. Die Messung der Reißdehnung an diesen EAH ergibt folgende Werte
F-max = 5,3 MPa (=Maximale Spannung = Reißspannung) Dehnung bei F-max: 593 %

Beispiel 7

EAH mit 30 Gew.-% Makromonomer im Copolymeren.

60 g der in Beispiel 2 formelmäßig beschriebenen Makromonomeren mit einer spezifischen Viskosität von J = 15 ml/g werden gemäß Beispiel 6 mit 140 g Butylacrylat in 300 g Butylacetet unter Zusatz von 0,05 g 5-Butylperneodecanoat polymerisiert. Nach Fällung in Methanol und Trocknung resultierte ein Polymeres mit
J = 225 ml/g. Reißdehnung einer daraus hergestellten Folie: 423 %
Reißspannung: 10,3 MPa.

Beispiel 8

80 g eines PMMA-Makromonomeren gemäß Beispiel 2 (J = 19,6 ml/g) werden mit 320 g Butylacrylat, 0,2 g 2-Ethylhexylthioglykolat und 510 g Butylacetat versetzt und auf 60 Grad C erwärmt. Nach Zugabe von 0,4 g t-Butylperpivalat wird im Temperaturbereich von 60 Grad C bis 90 Grad C polymerisiert.
Nach Abkühlen wird in Methanol ausgefällt und getrocknet. Es resultiert ein klares, farbloses Polymeres.
J = 145 ml/g.

Aus dem Polymeren werden Filme gegossen:

Reißdehnung : 706 %
Reißfestigkeit : 2,9 MPa.

Beispiel 9

Herstellung eines Polymeren B als Abmischkomponente für das Copolymere gemäß Beispiel 8.
In einem Polymerisationsgefäß wird eine Mischung aus:

| | |
|---|---|
| 4 185 g | Methylmethacrylat |
| 225 g | Methylacrylat |
| 45 g | Propantrioltriacrylat |
| 45 g | Allylmethacrylat |
| 2 g | 2-Ethylhexylthioglykolat |

unter Zusatz von 45 g Tetradecansulfonsäure-Natrium-Salz als Emulgator in 1 200 g destilliertem Wasser emulgiert. Nach Zugabe von 6 g Kaliumperoxodisulfat in 500 g Wasser sowie nach Zugabe von 1 g einer 1 %igen Eisen-II-sulfatlösung wird Argon eingeleitet und durch Zugabe von 2 g $Na_2S_2O_5$ (gelöst in 500 g Wasser) die Emulsionspolymerisation bei 30 Grad C gestartet. Die Reaktion wird so gesteuert, daß die Innentemperatur nicht über 80 Grad C ansteigt.

Nach dem Abkühlen erhält man ein dünnflüssiges Emulsionspolymerisat, aus dem durch Gefrierkoagulation und anschließendes Waschen feinteilige vernetzte PMMA-Teilchen erhalten werden.
Diese Teilchen sind in organischen Lösungsmitteln dispergierbar.

Beispiel 10

2,7 g des gemäß Beispiel 9 hergestellten Emulsionspolymerisates werden in Butylacetat dispergiert. Es werden 27 g Copolymeres gemäß Beispiel 8 zugesetzt und gemeinsam zu einem Film ausgegossen und getrocknet.

Es resultiert ein Polymerfilm, der im Vergleich zum nicht modifizierten Film eine erhöhte Reißfestigkeit aufweist: 3,4 MPa. Die Reißdehnung beträgt 515 %.

Beispiel 11

Herstellung des Makromonomeren

Eine Mischung aus 300 g Methylmethacrylat, 200 g Cyclohexylmethacrylat, 10 g Mercaptoethanol, 0,1 g AIBN wird 24 Stunden bei 40 Grad C und anschließend 24 Stunden bei 50 Grad C polymerisiert. Anschließend wird in Methanol ausgefällt und in Vacuum getrocknet (Ausbeute: 200 g)
J = 9,8 ml/g.

150 g des so erhaltenen Polymeren werden in 250 g Toluol gelöst. Nach Zugabe von 12 g Triethylamin und 12 g Methacrylsäureanhydrid wird auf 45 Grad C erwärmt und 24 Stunden bei dieser Temperatur belassen (Inertgas). Das Makromonomere wird durch Ausfällen in Methanol isoliert.
J = 10,4 ml/g)

Beispiel 12

Herstellung des Copolymeren

| | |
|---|---|
| 120 g | Makromonomeres gemäß Beispiel 11 |
| 280 g | Butylacrylat |
| 400 g | Butylacetat |

werden gemischt und bei 50 Grad C nach Zusatz von 0,05 g t-Butylperpivalat polymerisiert.

Nach Ausfällen in Methanol und Trocknen erhält man Copolymere, die aus Butylacetat zu glasklaren Filmen gegossen werden.
J = 323 ml/g
Reißfestigkeit $\sigma_R$ : 7,9 MPa

Reißdehnung $\varepsilon_R$: 478 %

Beispiel 13

Herstellung eines Blends

18 g des Copolymeren gemäß Beispiel 12 und 2,35 g Polystyrol (® Polystyrol 158 K der BASF) (Polystyrol ist mit Copolymeren aus Cyclohexylmethacrylat und Methylmethacrylat willig verträglich: DOS 36 32 369 vom 17.03.1986) werden in Toluol gelöst und zu einem Film ausgegossen. Nach Trocknung erhöht man einen Film, der folgende Eigenschaften aufweist:
Reißfestigkeit $\sigma_R$ : 8,9 MPa
Reißdehnung $\varepsilon_R$: 315 %

Auch hier wird also die Reißfestigkeit durch Zusatz eines mit dem Makromonomeren verträglichen Polymeren erhöht.

## Patentansprüche

1. Elastomere auf Acrylatbasis
dadurch gekennzeichnet,
daß sie zu mindestens 40 und bis zu 100 Gewichtsprozent aus einem oder mehreren Copolymerisaten mit einem Molekulargewicht größer als 50 000 Dalton, aufgebaut aus

   α) Acrylatmonomeren zu 50 - 95 Gewichtsprozent und
   β) Makromonomeren, bestehend aus einer vinylischen Gruppen und damit kovalent verbunden, einer Polyvinyleinheit, ausgewählt aus der Gruppe der Acrylate und Methacrylate mit einer Glastemperatur Tg von mindestens 60 Grad C, und einem Molekulargewicht von 500 bis 100 000 Dalton, bestehen,

   mit der Maßgabe daß die Uneinheitlichkeit $\frac{M_w - M_n}{M_n}$ der eingesetzten Makromonomeren einen Wert größer 0,5 besitzt.

2. Elastomere Acrylharze EAH gemäß Anspruch 1, dadurch gekennzeichnet, daß sie bestehen aus

   A) 60 - 100, insbesondere 60 - 99,9 Gew.-% Copolymere mit einem Molekulargewicht größer als 50000 Dalton, vorzugsweise im Bereich 100 000 bis 10 Millionen, aufgebaut aus

   a) 50 - 95 Gew.-%, vorzugsweise 70 - 90 Gew.-% (bezogen auf die Gesamtheit der Monomeren-Bestandteile von A)) Monomere oder Monomermischungen der Formel I

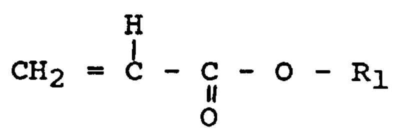

(I)

   b) 5 - 50 Gew.-%, vorzugsweise 10 - 30 Gew.-%, Makromonomeren der Makromonomernmischungen der Formel II oder III

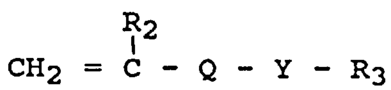

(II)

$$R_4 - Y - R_5 \qquad (III)$$

   mit einem Molekulargewicht der Makromonomeren im Bereich 500 - 50 000 Dalton und einer Glastemperatur Tg von wenigstens 60 Grad C,

c) 0 - 45 Gew.-Teile, vorzugsweise 0,1 bis 20 Gew.-Teile bezogen auf die Summe von a) + b) einer weiteren mit a) und b) copolymerisierbaren, von a) und b) verschiedenen Vinylverbindung $V_M$

B) 40 - 0, insbesonderen 40 - 0,1 Gew.-% nicht mit (I) copolymerisierte Polymere, aufgebaut aus den die Polymerketten Y bildenden Monomeren mit einem Molekulargewicht im Bereich 500 - 100 000 Dalton, mit der Maßgabe, daß

$R_1$ für einen Kohlenwasserstoffrest mit 1 - 12 Kohlenstoffatomen,

$R_2$ für Wasserstoff oder Methyl

$R_3$ für Wasserstoff oder einen Alkylrest mit 1 bis 24 Kohlenstoffatomen,

$R_4$,$R_5$ für Wasserstoff oder einen Alkylrest mit 1 bis 24 Kohlenstoffatomen, $R_5$ für eine $-CH_2 = CH$ - oder eine $-CH_2 = CCH_3$- Gruppe enthaltenden Kohlenwasserstoffrest mit 2 bis 20 Kohlenstoffatomen, mit der Maßgabe, daß wenn $R_4$ eine $CH_2$=CH- oder

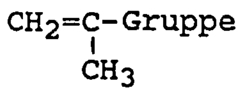

enthält, $R_5$ keine solchen Gruppen enthält und umgekehrt.

Y für eine Polymerkette ausgewählt aus den Struktureinheiten der Formeln

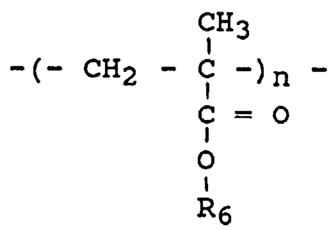

IV

oder

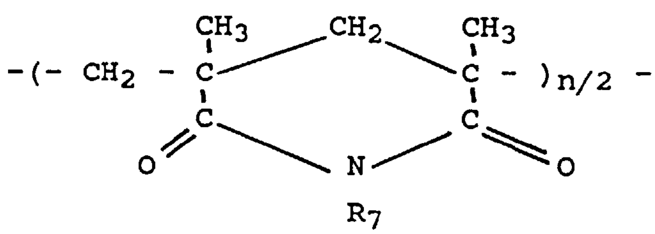

V

wobei

$R_6$ die Bedeutung Methyl, Ethyl, Isopropyl Cycloalkyl oder - gegebenenfalls substituiertes - Phenyl

$R_7$ die Bedeutung Alkyl mit 1 bis 8 Kohlenstoffatomen oder Aryl, besitzt und wobei

n so bemessen ist, daß das Molekulargewicht der Makromonomeren im Bereich 500 bis 100 000 Dalton liegt.

Q für einen bifunktionellen Rest der die Polymerkette Y mit der polymerisationsfähigen Einheit $CH_2 = CR_2$ verbindet. Steht mit der Maßgabe, daß das Molekulargewicht der Copolymeren A multipliziert mit dem Gewichtsbruch des Makromonomeren am Copolymeren deutlich größer sein muß als das Molekulargewicht des Makromonomeren der Formel II oder III.

**3.** Elastomere Acrylharze EAH gemäß Anspruch 2, dadurch gekennzeichnet, daß n in den Struktureinheiten der

Formel IV oder V für eine Zahl im Bereich 10 bis 1 000 steht.

4. Elastomere Acrylharze EAH gemäß Anspruch 2, dadurch gekennzeichnet, daß $R_1$ in den Monomeren der Formel I ausgewählt ist aus der Gruppe bestehend aus Ethyl, Propyl, Butyl, Pentyl, Hexyl und 2-Ethylhexyl.

5. Elastomere Acrylharze EAH gemäß Anspruch 2, dadurch gekennzeichnet, daß Q eine der Bedeutungen

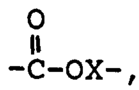, 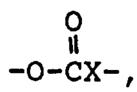, 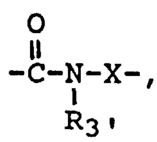, 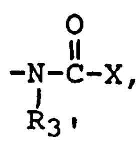, oder 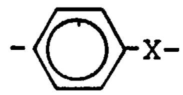

besitzt, wobei $R_{3'}$ die gleichen Bedeutungen wie $R_3$ besitzt und X für einen Alkylidenrest mit 2 bis 24 Kohlenstoffatomen, bevorzugt für einen Alkylidenrest, der mindestens ein Sauerstoffatom, ein Schwefelatom oder ein Stickstoffatom enthält, steht.

6. Elastomere Acrylharze EAH gemäß Anspruch 5, dadurch gekennzeichnet, daß X die Bedeutung

$-CH_2CH_2-S-$, oder 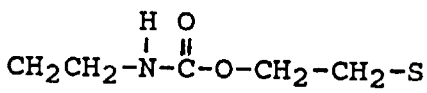

besitzt.

7. Elastomere Acrylharze EAH gemäß den Ansprüchen 2-6, dadurch gekennzeichnet, daß sie bestehen aus

A) 60 - 100 Gew.-% Copolymere aus

a')50 - 95 Gew.-% Ethylacrylat, Butlacrylat oder 2-Ethylhexylacrylat
b') 5 - 50 Gew.-% Makromonomeren der Formel II'oder II"

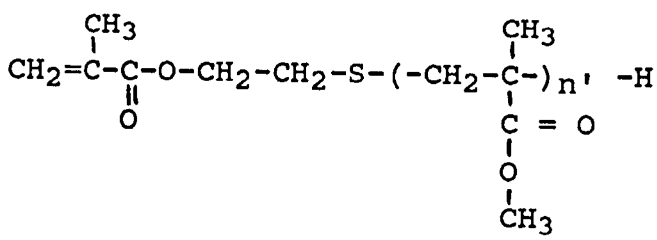

II'

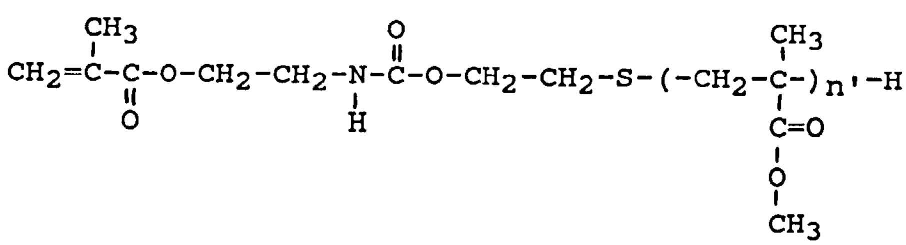

II"

wobei n'für 10 - 1 000 steht und

B) 40 - 0 Gew.-% Polymeren, aufgebaut aus Struktureinheiten des Typs

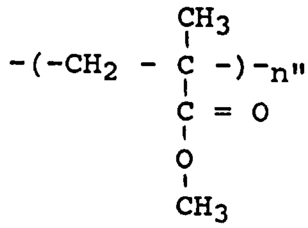

wobei n" für eine Zahl im Bereich 10 bis 1 000 steht.

**8.** Elastomere Acrylharze EAH gemäß den Ansprüchen 2-7, dadurch gekennzeichnet, daß die das Copolymer A aufbauende Polymerhauptkette im Temperaturbereich -50° bis + 100°C mit den Makromonomeren unverträglich ist.

**Claims**

**1.** Elastomers based on acrylate, characterised in that they comprise at least 40 and up to 100 wt.% of 1 or more copolymers with a molecular weight greater than 50,000 Daltons, synthesised from

α) acrylate monomers in an amount of 50 to 95 wt.%,
β) macromonomers comprising a vinylic group and a polyvinyl unit covalently bonded to the vinylic group, selected from the group of acrylates and methacrylates having a glass transition temperature Tg of at least 60°C and a molecular weight of from 500 to 100,000 Daltons, with the proviso that the non-uniformity

$$\frac{M_W - M_n}{M_n}$$

of the macromonomers used is of a value greater than 0.5.

**2.** Elastomeric acrylic resins EAH according to claim 1, characterised in that they comprise

A) 60 - 100, more particularly 60 - 99.9 wt.% of copolymers having a molecular weight greater than 50,000 Daltons, preferably within the range of 100,000 to 10 million, synthesised from

a) 50 - 95 wt.%, preferably 70 - 90 wt.% (based on the total amount of monomer Component A)) of monomers or monomer mixtures of formula I

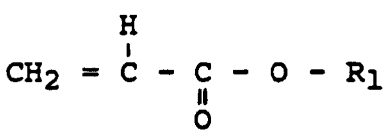

(I)

b) 5 - 50 wt.%, preferably 10 to 30 wt.% of macromonomers of macromonomer mixtures of formula II or III

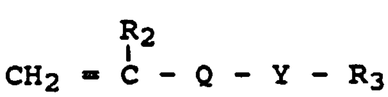

(II)

$$R_4 - Y - R_5 \qquad (III)$$

having a molecular weight of macromonomers within the range of 500 - 50,000 Daltons and a glass transition temperature Tg of at least 60°C,
c) 0 - 45 parts by weight, preferably 0.1 to 20 parts by weight based on the sum of a) + b) of a further vinylic compound $V_M$ which is copolymerisable with a) and b) and is different from a) and b)

B) 40 - 0, more particularly 40 - 0.1 wt.% of polymers not copolymerisable with (I), synthesised from the monomers forming the polymer chains Y and having a molecular weight within the range of 500 to 100,000 Daltons, with the proviso that

$R_1$ is a hydrocarbon group having 1 to 12 carbon atoms,
$R_2$ is hydrogen or methyl,
$R_3$ is hydrogen or an alkyl group having 1 to 24 carbon atoms,
$R_4$, $R_5$ is hydrogen or an alkyl group having 1 to 24 carbon atoms, $R_5$ is a hydrocarbon group comprising a $-CH_2=CH-$ or a $-CH_2=CCH_3-$ group and having 2 to 20 carbon atoms, with the proviso that when $R_4$ is a $CH_2=CH-$ or

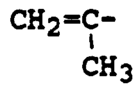

group, $R_5$ is not such a group and vice versa.
Y is a polymer chain selected from the structural units of formula

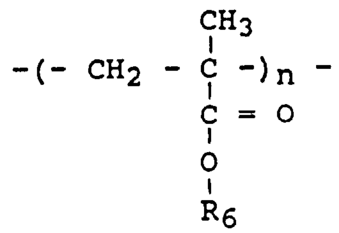

IV

or

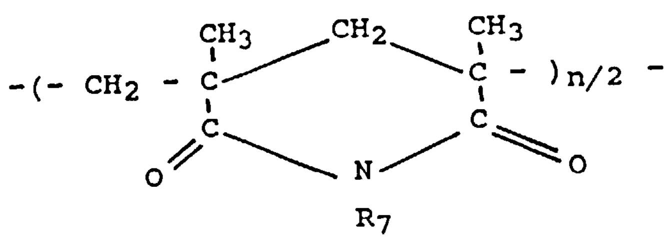

V

wherein

$R_6$ is methyl, ethyl, isopropyl, cycloalkyl or optionally substituted phenyl

$R_7$ is alkyl having 1 to 8 carbon atoms, or aryl and wherein

n is such that the molecular weight of the macromonomers is within the region of 500 to 100,000 Daltons.

Q is a bifunctional group which links the polymer chain Y with the polymerisable $CH_2=CR_2$ unit, with the proviso that the molecular weight of the copolymers A, when multiplied with the fraction of the weight of the macromonomers in the copolymer must be clearly greater than the molecular weight of the macromonomers of formula II or III.

**3.** Elastomeric acrylic resins EAH according to claim 2, characterised in that n in the structural units of the formula IV or V is a number within the range of 10 to 1,000.

**4.** Elastomeric acrylic resins EAH according to claim 2, characterised in that $R_1$ in the monomers of formula I is selected from the group comprising ethyl, propyl, butyl, pentyl, hexyl and 2-ethylhexyl.

**5.** Elastomeric acrylic resins EAH according to claim 2, characterised in that Q has one of the meanings

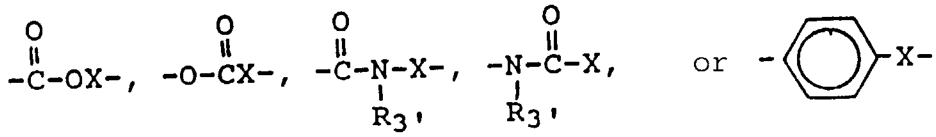

or

wherein $R_3$' has the same meanings as $R_3$ and X is an alkylidene group having 2 to 24 carbon atoms, preferably an alkylidene group which comprises at least one oxygen atom, one sulphur atom or one nitrogen atom.

**6.** Elastomeric acrylic resins EAH according to claim 5, characterised in that X has the meaning

$-CH_2CH_2-S-$, or 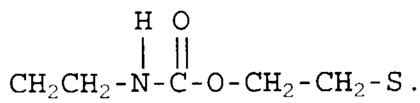

**7.** Elastomeric acrylic resins EAH according to claims 2 to 6, characterised in that they comprise

A) 60 - 100 wt.% of copolymers comprising

a') 50 - 95 wt.% of ethyl acrylate, butyl acrylate or 2-ethylhexyl acrylate
b') 5 - 50 wt.% of macromonomers of formula II' or II"

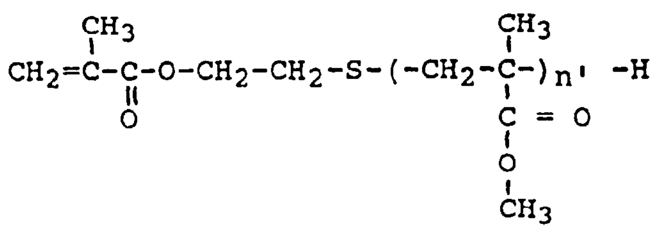

II'

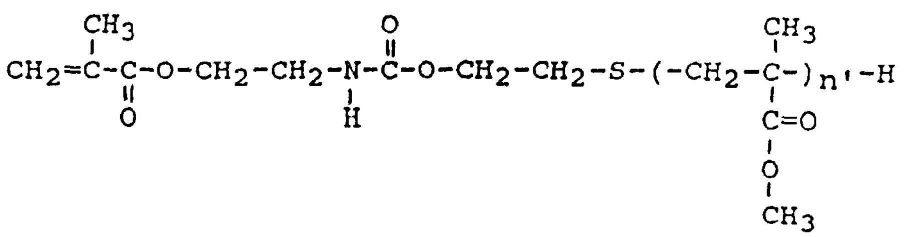

II"

wherein n' is 10 - 1,000 and

B) 40 - 0 wt.% of polymers, synthesised from structural units of type

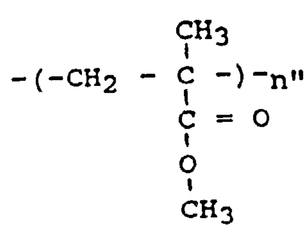

wherein n" is a number within the range of 10 to 1,000.

**8.** Elastomeric acrylic resins EAH according to claims 2 to 7, characterised in that the polymer-main chain, from which

the copolymer A is synthesised, is incompatible with the macromonomers within the temperature range of -50° to +100°C.

## Revendications

**1.** Elastomères à base d'acrylate,
caractérisés en ce qu'ils se composent, pour au moins 40 et jusqu'à 100% en poids, d'un ou de plusieurs copolymères ayant un poids moléculaire supérieur à 50 000 daltons, composés

α) de monomères d'acrylate pour 50 à 95% en poids et
β) de macromonomères, formés d'un groupement vinylique et d'un motif polyvinyle relié à celui-ci par une liaison covalente, choisi dans la groupe des acrylates et méthacrylates ayant une température de transition vitreuse Tg d'au moins 60°C et un poids moléculaire de 500 à 100 000 daltons,

étant spécifié que l'hétérogénéité $\frac{M_w - M_n}{M_n}$ des macromonomères utilisés a une valeur supérieure à 0,5.

**2.** Résines acryliques élastomères EAH selon la revendication 1, caractérisées en ce qu'elles se composent de

A) 60 à 100%, en particulier 60 à 99,9% en poids de copolymères ayant un poids moléculaire supérieur à 50 000 daltons, de préférence dans la gamme de 100 000 à 10 000 000, composés de

a) 50 à 95% en poids, de préférence 70 à 90% en poids [par rapport à la totalité des constituants monomères de A)] de monomères ou de mélanges de monomères de formule I

$$CH_2 = \overset{H}{C} - \underset{O}{\overset{\|}{C}} - O - R_1 \qquad (I)$$

b) 5 à 50% en poids, de préférence 10 à 30% en poids de macromonomères ou de mélanges de macromonomères de formule II ou III

$$CH_2 = \overset{R_2}{C} - Q - Y - R_3 \qquad (II)$$

$$R_4 - Y - R_5 \qquad (III)$$

ayant un poids moléculaire des macromonomères compris entre 500 et 50 000 daltons et une température de transition vitreuse Tg d'au moins 60°C,
c) 0 à 45 parties en poids, de préférence 0,1 à 20 parties en poids, par rapport à la somme de a) + b), d'un autre composé vinylique $V_M$ diffèrent de a) et de b), copolymérisable avec a) et b),

B) 40 à 0, en particulier 40 à 0,1% en poids de polymères non copolymérisés avec composés des monomères formant les chaînes polymères Y et ayant un poids moléculaire compris entre 500 et 100 000 daltons,
étant spécifié que

$R_1$ est mis pour un reste hydrocarboné à 1-12 atomes de carbone,
$R_2$ est mis pour un atome d'hydrogène ou un reste méthyle,
$R_3$ est mis pour un atome d'hydrogène ou un reste alkyle à 1-24 atomes de carbone,
$R_4$,$R_5$ sont mis chacun pour un atome d'hydrogène ou un reste alkyle à 1-24 atomes de carbone, ou pour un reste hydrocarboné à 2-20 atomes de carbone contenant un groupement $-CH_2=CH-$ ou $-CH_2=CCH_3-$, étant spécifié que quand $R_4$ contient un groupement $CH_2=CH$ ou

$$CH_2=\underset{CH_3}{C},$$

$R_5$ ne contient pas de tels groupements et vice versa,

Y est mis pour une chaîne polymère choisie parmi les motifs structurels de formules

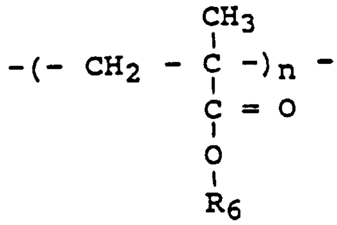

IV

ou

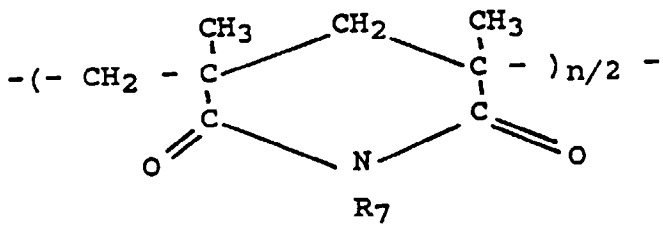

V

où

$R_6$ représente un groupement méthyle, éthyle, isopropyle, cycloalkyle ou phényle éventuellement substitué,

$R_7$ représente un reste alkyle à 1-8 atomes de carbone ou aryle, et

n a une valeur telle que le poids moléculaire des macromonomères se situe dans la gamme de 500 à 100 000 daltons,,

Q est mis pour un reste bifonctionnel qui relie la chaîne polymère Y au motif polymérisable $CH_2=CR_2$,

étant spécifié que le poids moléculaire des copolymères A, multiplié par la fraction en poids du macromonomère dans le copolymère, doit être nettement plus grand que le poids moléculaire du macromonomére de formule II ou III.

3. Résines acryliques élastomères EAH selon la revendication 2, caractérisées en ce que n àans les motifs structurels de formule IV ou V est mis pour un nombre compris entre 10 et 1000.

4. Résines acryliques élastomères EAH selon la revendication 2, caractérisées en ce que $R_1$ dans les monomères de formule I est choisi dans le groupe constitué par les restes éthyle, propyle, butyle, pentyle, hexyle et 2-éthylhexyle.

5. Résines acryliques élastomères EAH selon la revendication 2, caractérisées en ce que Q a l'une des significations

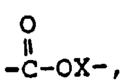 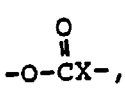 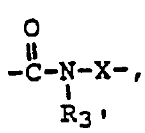 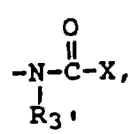 ou 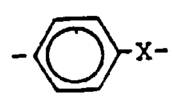

$R_3$' ayant les mêmes significations que $R_3$ et X étant mis pour un reste alkylidène à 2-24 atomes de carbone, de préférence pour un reste alkylidène qui contient au moins un atome d'oxygène, un atome de soufre ou un atome d'azote.

6. Résines acryliques élastomères EAH selon la revendication 5, caractérisées en ce que X représente un groupement $-CH_2CH_2-S-$ou

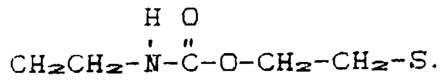

**7.** Résines acryliques élastomères EAH selon l'une quelconque des revendications 2 à 6, caractérisées en ce qu'elles se composent de

A) 60 à 100% en poids de copolymères composés de

a') 50 à 95% en poids d'acrylate d'éthyle, d'acrylate de butyle ou d'acrylate de 2-éthylhexyle,
b') 5 à 50% en poids de macromonomères de formule II' ou II"

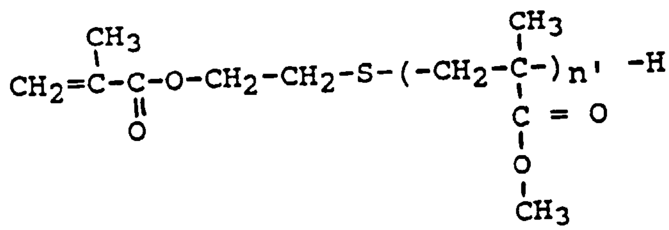

II'

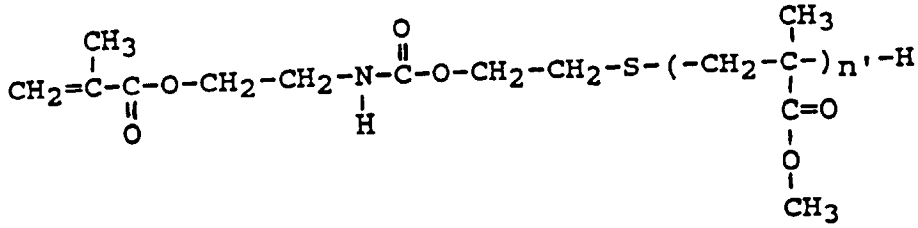

II"

n' étant mis pour un nombre de 10 à 1000, et

B) 40 à 0% en poids de polymères composés de motifs structurels du type

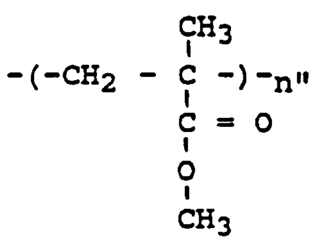

n" étant mis pour un nombre de 10 à 1000.

**8.** Résines acryliques élastomères EAH selon l'une quelconque des revendications 2 à 7, caractérisées en ce que la chaîne polymère principale entrant dans la constitution du copolymère A est incompatible avec les macromonomères dans la plage de température de -50° à +100°C.